# EUROPÄISCHE PATENTSCHRIFT

(11) **EP 3 685 067 B1**
(45) Veröffentlichungstag und Bekanntmachung des Hinweises auf die Patenterteilung: **06.01.2021**
(21) Anmeldenummer: 18766166.5
(22) Anmeldetag: 03.09.2018
(51) Int. Cl.: F16D 65/12

(54) **MEHRTEILIGE BREMSSCHEIBE**
MULTI-PART BRAKE DISC
DISQUE DE FREIN EN PLUSIEURS PARTIES

(30) Priorität: 20.09.2017 DE 102017121751
(43) Veröffentlichungstag der Anmeldung: 29.07.2020
(73) Patentinhaber: SAF-HOLLAND GmbH, 63856 Bessenbach (DE)
(72) Erfinder: ARPACI, Muhammet, 63741 Aschaffenburg (DE)
(74) Vertreter: Müller Schupfner & Partner Patent- und Rechtsanwaltspartnerschaft mbB
(86) Internationale Anmeldenummer: PCT/EP2018/073586
(87) Internationale Veröffentlichungsnummer: WO 2019/057472

(56) Entgegenhaltungen:
- EP-A1- 0 674 115
- DE-A1- 2 301 246
- DE-A1-102008 061 915
- DE-U1- 9 319 490
- US-A1- 2016 076 613
- US-B1- 6 793 057

## Beschreibung

Die vorliegende Erfindung betrifft eine Bremsscheibe, insbesondere für Nutzfahrzeuge.

Bremsscheiben, insbesondere für Nutzfahrzeuge, sind aus dem Stand der Technik bekannt. Diese Bremsscheiben sind dabei derart konzipiert, dass nachdem die Reibflächen durch den abrasiven Verschleiß, welcher während des Bremsvorganges durch den Kontakt der Reibflächen der Bremsscheibe mit dem Bremsbelag auftritt, eine gewisse Mindeststärke unterschritten haben, die gesamte Bremsscheibe gewechselt werden muss. Diese Art der konstruktionsbedingten Wartung von Bremsen ist dabei sowohl aufgrund des Materialaufwandes kostenintensiv, als auch bedingt durch den hohen Arbeitsaufwand, welcher für das Wechseln der verschlissenen Bremsscheibe benötigt wird.

Die US 2016/0076613 A1 zeigt eine Bremsfläche an einem rotierbaren Körper, wie beispielsweise einem Schienenfahrzeugrad.

Die US 6,793,057 B1 zeigt ein rotierendes Reibungssystem umfassend ein Schwungrad.

Die DE 10 2008 061 915 A1 betrifft eine zusammengesetzte Bremsscheibe, insbesondere belüftete Bremsscheibe, zum Beispiel für Kraftfahrzeuge.

Die DE 2 301 246 A1, die EP 0 674 115 A1 und die DE 93 19 490 U1 zeigen ebenfalls Schienenfahrzeugbremsscheiben.

Die DE 101 04 039 A1 betrifft eine Bremsscheibe, insbesondere für ein KFZ, mit zwei Reibringen, zwischen denen eine Mitnehmerscheibe zur Übertragung des Bremsmoments angeordnet ist, und wobei die Reibringe vom Befestigungselementen durchdrungen sind, welche die Reibringe in Axialrichtung an der Mitnehmerscheibe halten. Zwischen den beiden Reibringen sind Distanzstücke vorgesehen, welchen in langlochartige Durchbrüche der Mitnehmerscheibe eingesetzt sind.

Die DE 101 43 817 A1 betrifft ebenfalls eine Bremsscheibe für eine Kraftfahrzeugscheibenbremse mit einem Reibring, der zwei Ringelemente mit jeweils einer Reibfläche umfasst, wobei eines dieser Ringelemente mit einem Reibringträger und dem anderen Ringelement verbunden ist.

Die DE 10 2013 216 591 A1 betrifft eine innenbelüftete Kraftfahrzeugbremsscheibe, umfassend einen Trägerkörper mit Kühlkanälen für Reibringsegmente, welche wenigstens eine Reibfläche zur Anlage von wenigstens einem Reibbelag aufweist, wobei jeweils der Trägerkörper sowie zugeordnete Reibringsegment eine, aneinander zugewandte, Auflage aufweist, die planparallel zur Reibfläche vorgesehen ist, und dass die Auflage mit wenigstens einer Vertiefung zur formschlüssigen Aufnahme von wenigstens einem Verdrehsicherungselement derart vorgesehen ist, dass das Verdrehsicherungselement zwischen Reibringsegment und Tragkörper formschlüssig versenkt angeordnet ist.

Es ist somit Aufgabe der vorliegenden Erfindung, eine Bremsscheibe bereitzustellen, welche nur einen geringen Wartungsaufwand benötigt.

Gelöst wird diese Aufgabe mittels einer Bremsscheibe gemäß dem Anspruch 1. Vorteilhafte Weiterbildungen der Erfindung ergeben sich aus den abhängigen Ansprüchen.

Erfindungsgemäß umfasst eine Bremsscheibe einen ersten Reibring, einen zweiten Reibring und einen Träger, wobei die Bremsscheibe dazu ausgelegt ist, um eine Rotationsachse zu rotieren, wobei der Träger einen Anschlussabschnitt aufweist, mittels welchem der Träger an einem weiteren Element festlegbar ist, wobei der erste Reibring eine erste Reibfläche und der zweite Reibring eine zweite Reibfläche aufweist, welche dazu ausgelegt sind, jeweils mit einem Bremsbelag in Kontakt zu treten, wobei der erste Reibring eine Vielzahl von Verspannöffnungen und der zweite Reibring eine Vielzahl von Verspannöffnungen aufweist, wobei die Verspannöffnung des ersten Reibrings jeweils mit einer Verspannöffnung des zweiten Reibrings fluchtet, wobei die Verspannöffnungen dazu ausgelegt sind, Spannmittel aufzunehmen, um den ersten Reibring mit dem zweiten Reibring in Richtung der Rotationsachse zu verspannen, und wobei der Träger mit dem ersten Reibring und dem zweiten Reibring derart verbunden ist, dass ein Drehmoment um die Rotationsachse zwischen dem Träger und den Reibringen übertragbar ist. Die erfindungsgemäße Bremsscheibe kann insbesondere Einsatz in Scheibenbremsen von Nutzfahrzeugen finden. Der Träger der Bremsscheibe ist das Element oder Bauteil der Bremsscheibe, welches dazu ausgelegt ist, ein Drehmoment zwischen dem Reibring und dem weiteren Element zu übertragen. Der Träger kann insbesondere der Topf oder die Nabe der Bremsscheibe sein. Der Anschlussabschnitt des Trägers ist derjenige Bereich des selbigen, welcher dazu dient, die Bremsscheibe mit einem weiteren Element zu verbinden bzw. ein Drehmoment auf das weitere Element zu übertragen. Bevorzugt kann der Anschlussabschnitt dafür Ausnehmungen, insbesondere Bohrungen, aufweisen, welche dazu dienen, Montagemittel zur Befestigung aufzunehmen. Alternativ bevorzugt kann der Anschlussabschnitt auch durch Übertragungselemente gebildet sein, welche formschlüssig mit dem weiteren Element in Eingriff stehen oder bringbar sind. In anderen Worten bedeutet dies, dass der Anschlussabschnitt eine Art Verzahnung aufweisen kann, welche eine formschlüssige Drehmomentübertragung zwischen dem Träger und dem weiteren Element ermöglicht. Die Rotationsachse ist die Achse, um welche die Bremsscheibe rotiert. Diese Rotationsachse ist daher bevorzugt die Achse, um welche das weitere Element rotiert. Das weitere Element ist dabei ein weiteres Bauteil in der Drehmomentübertragungskette, insbesondere kann das weitere Element eine Nabe, eine Welle, eine Achse oder ein Rad sein, welches durch die Bremsscheibe gebremst werden soll. Die beiden Reibringe sind die Bauteile der Bremsscheibe, welche die beiden Reibflächen aufweisen. Bevorzugt bilden die beiden Reibringe die Bauteile der Bremsscheibe, welche den größten Abstand zur Rotationsachse aufweisen. Vorteilhafterweise sind die Reibringe zumindest bereichsweise im Wesentlichen rotationssymmetrisch zu der Rotationsachse aufgebaut. Wobei unter im Wesentlichen rotationssymmetrisch zu verstehen ist, dass die Geometrie bis auf Löcher, Ausnehmungen oder Vorsprüngen, welche zur Montage oder zur Drehmomentübertragung dienen, rotationssymmetrisch bezüglich der Rotationsachse ist. Die beiden Reibringe sind insbesondere ringförmig ausgestaltet, dies bedeutet unter anderem, dass diese eine die Rotationsachse umschließenden inneren Durchbruch aufweisen. Jeder dieser Reibringe verfügt dabei über eine Reibfläche, wobei der erste Reibring die erste Reibfläche und der zweite Reibring die zweite Reibfläche aufweist. Die Reibflächen der Reibringe dienen dazu, mit einem Bremsbelag in Kontakt treten zu können, wobei durch diesen Kontakt ein Drehmoment (Bremsmoment) um die Rotationsachse erzeugt wird. Bevorzugt sind die Reibflächen daher derart ausgestaltet, dass diese eine Normale aufweisen, welche parallel zur Rotationsachse orientiert ist. Der Bremsbelag ist insbesondere das statorseitige Reibelement der Kontaktpaarung. Die Vielzahl von Verspannöffnungen, welche sowohl der erste Reibring als auch der zweite Reibring aufweist, sind dabei derart angeordnet, dass die Verspannöffnungen des ersten Reibrings mit den Verspannöffnungen des zweiten Reibrings fluchten. Fluchten bedeutet in diesem Zusammenhang insbesondere, dass sich die Verspannöffnungen im Wesentlichen entlang derselben Richtung erstrecken und dass es möglich ist, dass ein Spannmittel beide fluchtenden Verspannöffnungen durchdringen kann, ohne dass das Spannmittel für oder bedingt durch diese Durchführung umgeformt oder getrennt werden muss. Die Verspannöffnungen können generell einen beliebigen Querschnitt aufweisen, bevorzugt ist der Querschnitt jedoch zumindest bereichsweise rund, insbesondere kreisrund, sodass eine kostengünstige Fertigung erzielt werden kann. Die Spannmittel, welche durch die Verspannöffnungen geführt werden können, dienen dazu, den ersten Reibring mit dem zweiten Reibring in Richtung der Rotationsachse zu verspannen. Verspannen bedeutet unter anderem, dass eine Kraft zwischen dem ersten und dem zweiten Reibring durch die Spannmittel übertragen wird. In anderen Worten kann dies bedeuten, dass die beiden Bauteile (erster und zweiter Reibring) durch die Spannmittel relativ zueinander in Richtung der Rotationsachse vorgespannt sind. Die Spannmittel sind Mittel zur kraft- und/oder formschlüssigen Kraftübertragung. Insbesondere sind die Spannmittel keine stoffschlüssigen Fügemittel. Beispielsweise können die Spannmittel durch Schrauben, Bolzen oder Nieten gebildet sein. Die Verbindung zwischen dem Träger und dem ersten Reibring bzw. dem zweiten Reibring ist dabei derart ausgestaltet, dass ein Drehmoment um die Rotationsachse übertragbar ist. Diese Übertragung des Drehmoments (Bremsmoment) kann dabei sowohl kraft- als auch formschlüssig erfolgen. Durch eine erfindungsgemäße Ausgestaltung der Bremsscheibe ist es möglich, den ersten Reibring und den zweiten Reibring in einfacher Weise vom Träger durch Demontage der Spannmittel zu separieren, sodass bei der Wartung der Bremsscheibe nur ein geringer Arbeits- und Materialaufwand benötigt wird und Kosten gespart werden können.

Bevorzugt sind die Reibringe aus einem anderen Material ausgebildet als der Träger. Ein anderes Material bedeutet dabei, dass die Materialzusammensetzung des Trägers unterschiedlich zu der Materialzusammensetzung der Reibringe ist. Durch die unterschiedliche Materialwahl ist es möglich, dass sowohl die Reibringe als auch der Träger optimal an die von ihnen zu erfüllenden Anforderungen angepasst werden können. Bevorzugt wird der Reibring dabei an die Anforderung des geringen Verschleißes angepasst und der Träger an die Anforderung hoher mechanischer Festigkeit. Bevorzugt sind die Reibringe und der Träger aus unterschiedlichen Stahllegierungen gebildet. Hierdurch resultiert eine besonders standfeste Bremsscheibe.

Vorzugsweise sind die beiden Reibringe derart gleich ausgebildet, dass diese austauschbar zueinander sind. Derart gleich bedeutet dabei insbesondere, dass die beiden Reibringe austauschbar zueinander sind. Hierdurch können Kosten, insbesondere in der Lieferkette, gespart werden. Besonders bevorzugt sind der erste und der zweite Reibring komplett gleich. In anderen Worten bedeutet dies, dass der erste Reibring und der zweite Reibring nicht nur austauschbar zueinander sind, sondern dass diese bis auf ihre Einbauposition keine Unterschiede zueinander aufweisen. Hierdurch wird die Stückzahl erhöht, sodass eine kostengünstigere Fertigung resultiert.

Zweckmäßigerweise erstrecken sich die Verspannöffnungen im Wesentlichen parallel zu der Rotationsachse. Hierdurch kann eine besonders kompakte Bauweise der Bremsscheibe erreicht werden. Im Wesentlichen parallel bedeutet dabei, dass die Erstreckung der Verspannöffnung einen Winkel von +/- 5°, insbesondere von +/- 3°, mit der Rotationsachse bilden dürfen. Hierdurch wird erreicht, dass die Spannmittel eine besonders geringe Belastung bei einer thermisch bedingten Ausdehnung der Reibringe erfahren.

Bevorzugt sind die Spannmittel reversibel lösbar. Reversibel lösbar sind Spannmittel dann, wenn diese zerstörungsfrei von der Bremsscheibe separiert werden können. Hierdurch kann eine einfache und kostengünstige Demontage bzw. Montage der Bremsscheibe ermöglicht werden. Insbesondere können die Spannmittel durch Schrauben, Bolzen oder Muttern gebildet sein.

Bevorzugt weisen die Verspannöffnungen einen ersten Abschnitt und einen zweiten Abschnitt auf, wobei der erste Abschnitt eine Vertiefung oder ein Sackloch ist, wobei der zweite Abschnitt ein Durchgangsloch ist, und wobei der Durchmesser des ersten Abschnitts der Verspannöffnung größer ist als der Durchmesser des zweiten Abschnitts der Verspannöffnung. Hierdurch wird erreicht, dass die Köpfe der Spannmittel leicht untergebracht werden können. Bevorzugt sind die Verspannöffnungen derart ausgebildet, dass diese sich von der Reibfläche der Reibringe aus erstrecken. In anderen Worten bedeutet dies, dass die Verspannöffnungen in die Reibfläche ein gebracht ist. Hierdurch kann eine besonders einfache Montage bzw. Demontage der Reibflächen erreicht werden, da die Durchgangsöffnungen besonders gut erreicht werden. Besonders bevorzugt liegen die Verspannöffnungen dabei in der Mitte der radialen Erstreckung der Reibringe. Die Verspannöffnungen können dabei bevorzugt derart angeordnet sein, dass alle Verspannöffnungen eines Reibrings die gleiche Distanz zur Rotationsachse aufweisen, sodass die Spannmittel besonders gleichförmig belastet werden. Alternativ bevorzugt sind die Verspannöffnungen derart angeordnet, dass zumindest zwei Verspannöffnungen unterschiedliche Abstände zur Rotationsachse aufweisen. Der Vorteil dieser Ausführungsform liegt darin, dass hierdurch die Verwirbelung des umgebenden Fluids gesteigert wird, sodass die Bremsscheibe besser gekühlt wird. Der erste Abschnitt der Verspannöffnung bildet eine Vertiefung oder ein Sackloch aus, sodass dieser insbesondere dadurch charakterisiert ist, dass dieser den Reibring nicht vollständig durchdringt. Der zweite Abschnitt der Verspannöffnung ist zweckmäßigerweise als ein Durchbruch oder ein Durchgangsloch ausgebildet, welches den Reibring daher vollständig durchdringt. Der Übergang zwischen dem ersten Abschnitt und dem zweiten Abschnitt erfolgt bevorzugt sprunghaft, sodass ein Absatz gebildet wird, welcher insbesondere als Anlagefläche für die Spannmittel fungiert. Unter dem Durchmesser ist dabei der Durchmesser des kleinstmöglichen Kreises zu verstehen, welcher den Querschnitt umschließen kann. Die Querschnitte des ersten bzw. zweiten Abschnitts sind bevorzugt konstant entlang der Erstreckungsrichtung der Verspannöffnungen. Die Formen der Querschnitte kann generell beliebig gewählt werden, wobei diese jedoch bevorzugt bereichsweise rund, insbesondere jedoch kreisrund sind, denn hierdurch kann eine besonders kostengünstige Herstellung erreicht werden. Bevorzugt liegt das Verhältnis des Durchmessers des zweiten Abschnitts zum Durchmesser des ersten Abschnitts in einem Bereich von 0,35 bis 0,85. Hierdurch kann eine besonders einfache Montage der Spannmittel erreicht werden. Besonders bevorzugt liegt das Verhältnis in einem Bereich von 0,5 bis 0,82. Denn es hat sich gezeigt, dass bei einer derartigen Ausgestaltung nur eine geringe Neigung zur Rissbildung aufgrund von thermisch bedingten Verformungen auftritt. Zum Erreichen einer besonders standfesten Bremsscheibe ist es vorteilhaft, wenn der zweite Abschnitt den Reibring in Richtung Rotationsachse zu zumindest 20 % durchdringt. Erfindungsgemäß weist der Träger einen Montageabschnitt auf, wobei der erste und der zweite Reibring am Montageabschnitt angeordnet sind. Der Montageabschnitt dient daher insbesondere zur Drehmomentübertragung zwischen dem Träger und den beiden Reibringen. Zusätzlich oder alternativ kann der Montageabschnitt auch dazu ausgelegt sein, die Reibringe, insbesondere in Richtung der Rotationsachse, zu lagern. Diese, insbesondere unmittelbare, Anordnung der Reibringe am Träger reduziert die in der Drehmomentübertragungskette bzw. in der Kraftübertragungskette vorhandenen Bauteile, sodass Kosten eingespart und Setzungserscheinungen reduziert werden können. Durch die bauteilige Trennung der Reibringe vom Träger kann zusätzlich noch erreicht werden, dass durch die Kontaktdämpfung, welche durch Mikroreibung in der Trennfuge zwischen Träger und Reibring entsteht, die schwingungsdämpfenden Eigenschaften der Bremsscheibe gesteigert werden, sodass insbesondere unangenehme Erscheinungen wie Bremsenquietschen reduziert werden.

In einer bevorzugten Ausführungsform ist der Montageabschnitt ein radial nach außen ragender Montageflansch, welcher zwischen dem ersten und dem zweiten Reibring angeordnet ist. Der Montageflansch ist daher ein radial nach außen vorragender Vorsprung, welcher geometrisch derart angeordnet bzw. ausgestaltet ist, dass sich dieser zwischen dem ersten und dem zweiten Reibring befindet. In anderen Worten bedeutet dies, dass der Montageflansch bevorzugt in axialer Richtung gesehen von dem ersten und dem zweiten Reibring umgeben ist. Der Montageflansch weist bevorzugt Montageflächen auf, an denen die Reibringe mittel- oder unmittelbar angeordnet sein können. Diese Montageflächen können dabei derart ausgestaltet sein, dass diese eine Normale aufweisen, welche in Richtung der Rotationsachse weist. Hierdurch wird die Montage der Reibringe erheblich vereinfacht und erleichtert. Der Montageflansch kann insbesondere durch eine Vielzahl von separat voneinander radial nach außen weisende Vorsprünge gebildet sein. Separat bedeutet in diesem Zusammenhang unter anderem, dass die Montageflächen der Montageflansche bzw. des Montageflanschs nicht mit denen von anderen Montageflanschen verbunden ist. Dies ist insbesondere dadurch erkennbar, dass jeder Montageflansch eigene Montageflächen ausbildet. Durch diese separierte Ausgestaltung des Montageflansches bzw. durch die Separierung des Montageflansches in mehrere Submontageflansche kann eine Reduktion des Gewichts erreicht werden. Besonders bevorzugt ist es, wenn die separierten Submontageflasche dabei derart ausgebildet sind, dass die Reibringe von dem umgebenden Fluid hinterströmt werden können, sodass die Kühlwirkung der Bremsscheibe gesteigert wird. Alternativ bevorzugt ist es, wenn der Montageflansch in Umfangsrichtung durchgängig ausgebildet ist, sodass die Montageflächen des Montageflansches in Umfangsrichtung durchgängig ausgebildet sind. Hierdurch kann die Kerbwirkung reduziert werden, sodass eine besonders belastbare Bremsscheibe resultiert. Alternativ kann der Montageflansch auch durch nach außen weisende Verzahnungselemente ausgebildet sein, welche dabei formschlüssig mit dem ersten und dem zweiten Reibring in Eingriff stehen, sodass ein Drehmoment um die Rotationsachse übertragbar ist.

Erfindungsgemäß weist der Montageabschnitt eine Vielzahl von Übertragungsstrukturen auf, wobei der erste und der zweite Reibring jeweils eine Vielzahl von korrespondierenden Transmissionsstrukturen aufweist, wobei die Übertragungsstrukturen derart formschlüssig mit den Transmissionsstrukturen in Eingriff stehen oder bringbar sind, dass ein Drehmoment um die Rotationsachse formschlüssig übertragbar ist. Die Übertragungsstrukturen und/oder die Transmissionsstrukturen sind dabei, um eine hohe mechanische Belastbarkeit zu erreichen,einstückig mit dem Träger und/oder dem Reibring ausgebildet. Die Übertragungsstrukturen und Transmissionsstrukturen können dabei Vorsprünge oder Rücksprünge sein, welche insbesondere in Richtung der Rotationsachse vor- bzw. zurückspringen und sich vorteilhafterweise in einem montierten Zustand mittel und/oder unmittelbar kontaktieren. Alternativ bevorzugt können die Übertragungs- bzw. die Transmissionsstrukturen auch derart ausgebildet sein, dass diese radial von der Rotationsachse weg vor- bzw. zurückspringen. Durch diese korrespondierenden Übertragungs- bzw. Transmissionsstrukturen ist es in einfacher Weise möglich, auch stark schwankende Drehmomente (Bremsmoment) sicher durch Formschluss zu übertragen. Korrespondierend bedeutet dabei, dass wenn die Übertragungsstrukturen als männlich ausgestaltet sind (hervorspringend), dass die korrespondierende Transmissionsstruktur dementsprechend weiblich (rückspringend) ausgebildet ist. Darüber hinaus bedeutet korrespondierend auch, dass die Transmissionsstruktur und die Übertragungsstruktur eine ähnliche Geometrie aufweisen müssen, sodass diese zueinander anordenbar sind. Die korrespondierende Transmissionsstruktur zu einer Übertragungsstruktur kann daher insbesondere die räumlich nächstliegende Transmissions- bzw. Übertragungsstruktur sein. Bevorzugt bilden die Übertragungs- bzw. Transmissionsstrukturen dabei jeweils eine bereichsweise runde, insbesondere kreisrunde, Kontur auf dem Montageabschnitt oder dem Montageflansch aus. Durch diese zumindest bereichsweise runde Ausgestaltung wird zum einen eine geringe Kerbwirkung erreicht, als auch eine besonders kostengünstige Fertigung erzielt.

Vorteilhafterweise weist zumindest einer der Reibringe einen Vorsprung auf, welcher derart in einen jeweiligen Rücksprung im anderen Reibring eingreift, dass die beiden Reibringe gegen eine Verdrehung relativ zueinander um die Rotationsachse formschlüssig gesichert sind. Hierdurch kann eine besonders sichere Bremsscheibe erreicht werden, da ein oder mehrere formschlüssige Mechanismen in der Bremsscheibe vorhanden sind, welche eine rotatorische Verlagerung der Reibringe zu einander verhindert, sodass eine gleichmäßige Belastung der Reibringe sichergestellt wird. Unter jeweiligen ist dabei zu verstehen, dass der Vorsprung zum Rücksprung eine ähnliche Geometrie aufweist und dass der Vorsprung zum jeweiligen Rücksprung dazu bestimmt ist, dass diese ineinandergreifen. Insbesondere kann jeweilig dabei bedeuten, dass der geometrisch nächstliegende Rücksprung eine formschlüssige Paarung mit dem nächstliegenden Vorsprung bildet.

Bevorzugt besteht der erste Reibring und/oder der zweite Reibring in Umfangsrichtung aus einer Vielzahl von Reibsegmenten. Durch diese Unterteilung des ersten Reibrings und/oder des zweiten Reibrings in mehrere Segmente kann eine besonders einfache Montage erreicht werden. Die Umfangsrichtung ist dabei die Polarkoordinate um die Rotationsachse.

Vorteilhafterweise sind die Reibsegmente des einen Reibrings in Umfangsrichtung versetzt zu den Reibsegmenten des anderen Reibrings angeordnet. Durch das versetzt zu einander Anordnen der Reibsegmente wird erreicht, dass die Reibpaarungen (Reibfläche Bremsbelag) der beiden Reibringe nicht gleichzeitig von einem Reibsegment zum anderen Reibsegment "springt", sodass die Belastung reduziert wird.

In einer bevorzugten Ausführungsform weist jedes Reibsegment mindestens eine der Verspannöffnungen und eine Vielzahl von Transmissionsstrukturen auf. Hierdurch ist es möglich, dass jedes Reibsegment einzeln demontiert bzw. montiert werden kann und dass die Spannmittel lediglich eine (translatorische) Verlagerung in Richtung der Rotationsachse verhindern müssen, während die Transmissionsstrukturen eine Verdrehung verhindern. Durch diese Belastungsaufteilung wird eine besonders sichere und standfeste Festlegung der Reibsegmente erreicht.

In einer bevorzugten Ausführungsform verlaufen die in Umfangsrichtung den benachbarten Reibsegmenten zugewandten Flächen des Reibsegments zumindest bereichsweise, vorzugsweise überwiegend, schräg zu der radialen Richtung. Die radiale Richtung ist dabei die Richtung, welche radial von der Rotationsachse wegweist. Die Rotationsrichtung, die Umfangsrichtung und die radiale Richtung bilden dabei ein Zylinderkoordinatensystem, wobei die Rotationsachse die Höhenrichtung, die Umfangsrichtung die polare Richtung und die radiale Richtung die Radialkoordinate darstellen. Die den benachbarten Reibsegmenten zugewandten Flächen des Reibsegments sind insbesondere die Flächen des Reibsegments, welche dieses in Umfangsrichtung begrenzen. Diese den benachbarten Reibsegment zugewandten Flächen können das benachbarte Reibsegment berühren, oder einen Spalt zu diesem aufweisen. Durch das schräg Verlaufen - der den benachbarten Reibsegmenten zugewandten Flächen - wird erreicht, dass während des Bremsvorgangs kein schlagartiger Eingriff mit dem kontaktierenden Bremsbelag stattfindet.

In einer bevorzugten Ausführungsform weisen die den benachbarten Reibsegmenten zugewandten Flächen einen Vorsprung in Umfangsrichtung auf, welcher derart ausgestaltet ist, dass das Reibsegment, welches in Rotationsvorzugsrichtung hinter einem anderen Reibsegment angeordnet ist, unter das andere Reibsegment greift. Hierdurch kann ein nach außen schleudern von separierten oder nicht mehr befestigten Reibsegmenten zumindest kurzfristig verhindert werden. Die Rotationsvorzugsrichtung ist die Rotationsrichtung der Bremsscheibe, welche die Bremsscheibe zur überwiegenden Zeit während der Benutzung vollführt. In anderen Worten bedeutet dies, dass die Rotationsvorzugsrichtung diejenige Richtung ist, in welche die Bremsscheibe bei Vorwärtsfahrt rotiert. Der Vorsprung ist dabei eine geometrisch vorspringende Form in Umfangsrichtung, wobei der Vorsprung bevorzugt nicht sprunghaft ausgebildet ist, sondern vielmehr einen kontinuierlichen Übergang mit anderen Bestandteilen der zugewandten Fläche ausbildet. Unter Untergreifen ist in diesem Zusammenhang zu verstehen, dass der Vorsprung in radialer Richtung derart ausgebildet ist, dass dieser näher an der Rotationsachse ist, sodass der Vorsprung eine Art Hinterschneidung mit dem weiteren benachbarten Reibsegment bilden kann. Bevorzugt ist die benachbarte Reibsegment zugewandte Fläche S-förmig ausgebildet. S-förmig bedeutet dabei, dass es keine scharfen Richtungsänderungen der Tangente entlang der den benachbarten Reibsegmenten zugewandten Fläche gibt, wobei bei einer S-förmigen Ausgestaltung bevorzugt eine Tangente der Fläche in einem Punkt parallel zur Umfangsrichtung ausgebildet ist. Durch diese S-förmige Ausgestaltung ist es möglich, dass keine hohen Kerbwirkungsfaktoren durch sprunghafte Änderungen der Geometrie hervorgerufen werden.

Zweckmäßigerweise umfasst der Träger und/oder die Nabe ein äußeres Nabenelement und ein inneres Nabenelement, wobei das äußere Nabenelement dazu ausgelegt ist, die Reibringe zu lagern, wobei das innere Nabenelement dazu ausgelegt ist, ein Drehmoment auf das weitere Element zu übertragen, wobei das äußere Nabenelement radiale Ausnehmungen aufweist, in welche radiale Vorsprünge des inneren Nabenelements eingreifen, sodass ein Drehmoment formschlüssig zwischen dem äußeren Nabenelement und dem inneren Nabenelement übertragbar ist. Durch diese formschlüssige Übertragung des Drehmoments zwischen dem inneren und dem äußeren Nabenelement ist es möglich, dass insbesondere auch hochdynamisch wechselnde Drehmomente übertragen werden können. Bevorzugt sind die radialen Ausnehmungen des äußeren Nabenelements und die radialen Vorsprünge des inneren Nabenelements dabei derart ausgestaltet, dass das äußere Nabenelement in Richtung der positiven und negativen Rotationsachse relativ zum inneren Nabenelement bis auf fertigungsbedingte Toleranzen nicht verlagerbar ist. Dies kann zum Beispiel dadurch erreicht werden, dass beide Elemente bereits beim Herstellungsprozess ineinander gegossen wurden.

In einer bevorzugten Ausführungsform weisen zumindest einige radiale Deckflächen der radialen Vorsprünge einen Winkel mit der Rotationsachse auf. Unter Winkel ist dabei zu verstehen, dass diese einen Winkel mit der Rotationsachse bilden, welcher ungleich 0° und ungleich 180° ist. Die radialen Deckflächen der Vorsprünge sind die in radialer Richtung begrenzenden Deckflächen der Vorsprünge. Durch die Winkligkeit wird insbesondere beim Gießprozess ein Ausheben oder Ausnehmen aus der Form erleichtert. Zusätzlich kann durch diese winkligen Deckflächen auch noch eine Zentrierwirkung erreicht werden.

Weitere Vorteile und Merkmale der vorliegenden Erfindung ergeben sich aus der nachfolgenden Beschreibung mit Bezug auf die beigefügten Figuren. Einzelne in den gezeigten Ausführungsformen offenbarten Merkmale können auch in anderen Ausführungsformen eingesetzt werden, sofern dies nicht ausdrücklich ausgeschlossen wurde. Es zeigen:
- Figur 1: eine Ausführungsform der erfindungsgemäßen Bremsscheibe,
- Figur 2: einen Schnitt durch eine Bremsscheibe,
- Figur 3: einen weiteren Schnitt durch eine Bremsscheibe,
- Figur 4: einen zusätzlichen Schnitt durch eine Bremsscheibe,
- Figur 5: einen Schnitt durch eine alternative Ausführungsform der Bremsscheibe.

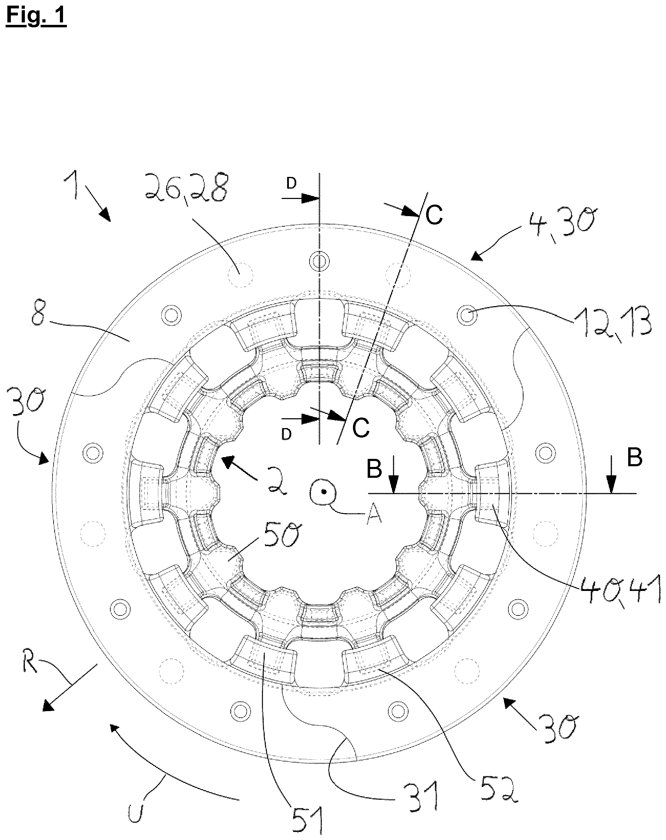

In Figur 1 ist eine Bremsscheibe 1 gezeigt, wobei der erste Reibring 4 aus drei Reibsegmenten 30 besteht. Jedes dieser Reibsegmente 30 weist dabei drei Verbindungsöffnungen 12 auf, welche mit jeweils korrespondierenden Verbindungsöffnungen 13 des zweiten (nicht dargestellten) Reibrings 6 fluchten. Jedes der Reibsegmente 30 bildet dabei einen Teil der ersten Reibfläche 8 aus, wobei jedes der Reibsegmente 30 über zwei Transmissionsstrukturen 28 verfügt. Diese Transmissionsstrukturen 28 sind in der dargestellten Ausführungsform kreisrund ausgebildet und erstrecken sich entlang der Rotationsachse A. Die Rotationsachse A bildet mit der radialen Richtung R und der Umfangsrichtung U ein Zylinderkoordinatensystem aus. Die Transmissionsstrukturen 28 sind formschlüssig in Eingriff mit den Übertragungsstrukturen 26 des Montageabschnitts 24 (in der Figur 1 nicht erkennbar). Der Träger 2 ist in der dargestellten Ausführungsform durch das äußere Nabenelement 40 und das innere Nabenelement 50 gebildet. Das äußere Nabenelement 40 weist dabei radiale Ausnehmungen 41 auf, in welche die radialen Vorsprünge 51 des inneren Nabenelements 50 eingreifen. Die radialen Vorsprünge 51 sind dabei durch radiale Deckflächen 52 in Umfangsrichtung R nach außen begrenzt. Die Reibsegmente 30, welche den ersten Reibring 4 bilden, weisen dabei Flächen auf, welche den benachbarten Reibsegmenten zugewandt sind. Diese den benachbarten Reibsegmenten zugewandten Flächen 31 sind dabei in der dargestellten Ausführungsform S-förmig ausgebildet.

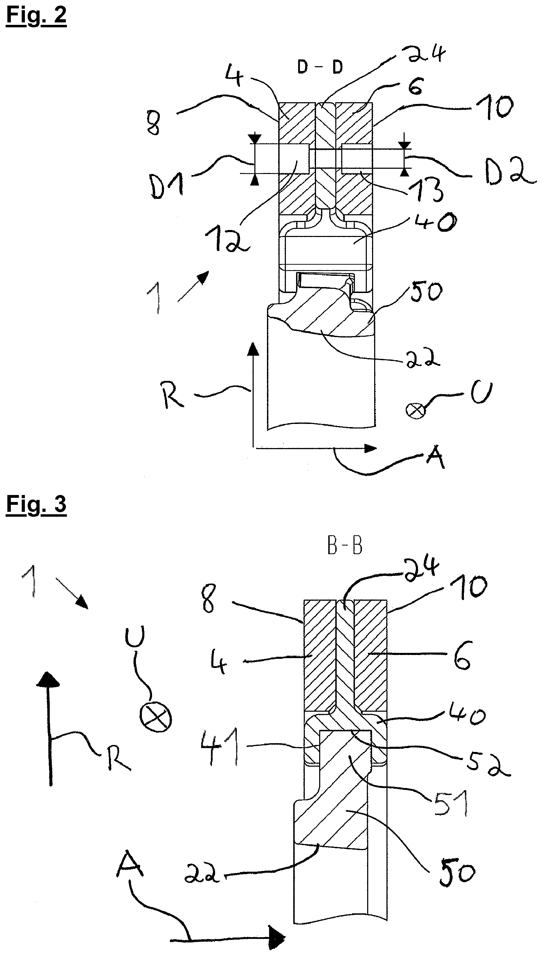

In der Figur 2 ist ein Schnitt durch eine Bremsscheibe 1 dargestellt, welche zu einem Schnitt von D nach D aus Figur 1 passen kann. In der Figur 2 ist der Montageabschnitt 24 durch einen in radialer Richtung R nach außen weisenden Montageflansch gebildet, welcher zwischen dem ersten Reibring 4 und dem zweiten Reibring 6 angeordnet ist. Der erste Reibring 4 weist dabei eine erste Reibfläche 8 und der zweite Reibring 6 eine zweite Reibfläche 9 auf. Der erste Reibring 4 verfügt über eine - sich von der Reibfläche 8 aus erstreckende - Verbindungsöffnung 12, welche einen ersten Abschnitt und einen zweiten Abschnitt umfasst. Der erste Abschnitt weist dabei einen Durchmesser D1 auf, welcher größer ist als der Durchmesser D2 des zweiten Abschnitts. In der in der Figur 2 dargestellten Ausführungsform ist im zweiten Reibring 6 ebenfalls eine Verspannöffnung 13 vorgesehen, welche einen ersten Abschnitt und einen zweiten Abschnitt aufweist. Zwischen den beiden fluchtenden Verspannöffnungen 12 und 13 ist eine ebenfalls fluchtende Öffnung durch den Montageflansch 24 vorgsehen, sodass nicht dargestellte Spannmittel 14 durch diese Öffnungen geführt werden können. Der aus dem äußeren Nabenelement 40 und dem inneren Nabenelement 50 bestehende Träger weist dabei einen Anschlussabschnitt 22 auf, welcher ein Drehmoment um die Rotationsachse A auf eine Welle bzw. eine Achse übertragen kann.

Der in der Figur 3 dargestellte Schnitt durch eine Bremsscheibe könnte zu dem Schnitt B-B aus der Figur 1 passen. Die in der Figur 3 dargestellte Ausführungsform der Bremsscheibe 1 umfasst wiederum einen ersten Reibring 4 und einen zweiten Reibring 6, zwischen welchen sich ein radial nach außen weisender Montageflansch 24 erstreckt, wobei das äußere Nabenelement 40 eine radiale Ausnehmung 41 aufweist, in welcher ein radialer Vorsprung 51 des inneren Nabenelements 50 umschließend angeordnet ist. In der in der Figur 3 dargestellten Ausführungsform weist die radiale Deckfläche 52 des radialen Vorsprungs 51 dabei keinen Winkel zur Rotationsachse A auf. Radial nach innen ist dabei im inneren Nabenelement 50 der Anschlussabschnitt 22 der Bremsscheibe 1 angeordnet.

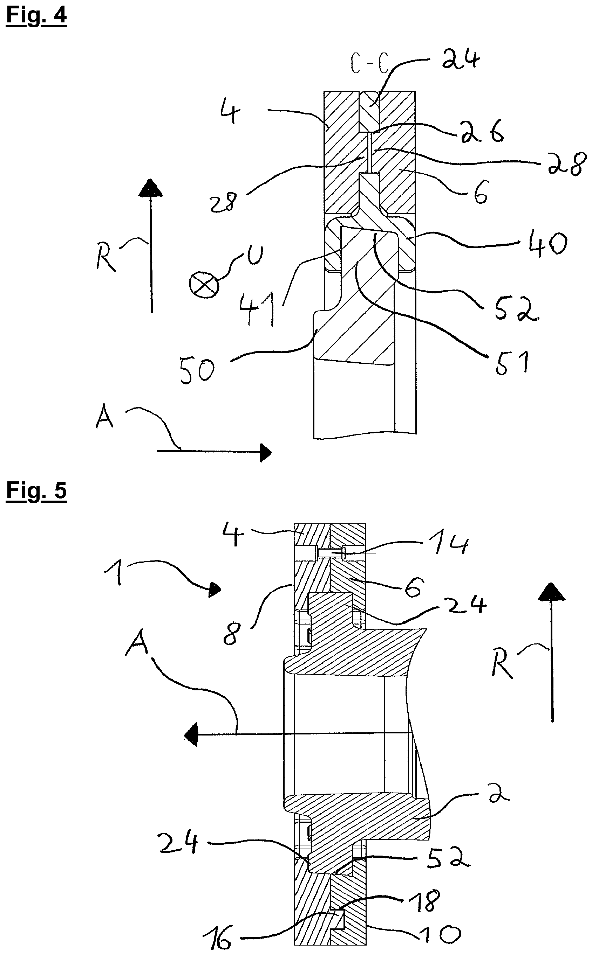

Der in der Figur 4 dargestellte Schnitt durch eine Bremsscheibe 1 könnte einem Schnitt aus der Figur 1 von C nach C entsprechen. Auch die in der Figur 4 dargestellte Ausführungsform der Bremsscheibe 1 weist einen ersten Reibring 4 und einen zweiten Reibring 6 auf. Die beiden Reibringe 4 und 6 verfügen dabei in der Schnittebene jeweils über eine Transmissionsstrukturen 28, welcher als ein Vorsprung in Richtung der Rotationsachse A ausgebildet ist. Diese Transmissionsstrukturen 28 greifen dabei formschlüssig in korrespondierende Übertragungsstrukturen 26 des Montageabschnitts 24 ein. Der Montageabschnitt 24 ist dabei durch einen sich in Radialrichtung R erstreckenden Montageflansch gebildet. Das äußere Nabenelement 40 umfasst dabei in der Schnittebene eine radiale Ausnehmungen 41, welche den radialen Vorsprung 51 des inneren Nabenelements 50 umfasst. Die radialen Deckflächen 52 des radialen Vorsprungs 51 weisen dabei einen Winkel zur Rotationsachse A auf, welcher ungleich 0° und ungleich 180° ist.

Der in der Figur 5 dargestellte Schnitt durch eine erfindungsgemäße Bremsscheibe 1 ist insbesondere dadurch charakterisiert, dass die beiden Reibringe 4 und 6 direkt formschlüssig mit dem Träger 2 über den Montageabschnitt 24 in Eingriff stehen. Der Montageabschnitte 24 ist durch radiale Vorsprünge ausgebildet. Der in der unteren Hälfte in der Figur 5 dargestellte Vorsprung des Montageabschnitts 24 weist dabei eine radiale Deckfläche 52 auf, welche einen Winkel mit der Rotationsachse A bildet, welcher ungleich 0° und ungleich 180° ist. Um eine Verspannung der Reibringe 4 und 6 in axialer Richtung A zueinander zu bewerkstelligen, sind diese mittels des Spannmittels 14 axial verspannt. Um eine Verdrehung um die Rotationsachse A zwischen dem ersten Reibring 4 und dem zweiten Reibring 6 zu vermeiden, weist der erste Reibring 4 in der dargestellten Schnittebene einen Vorsprung 16 in Richtung der Rotationsachse A auf, welcher mit einem jeweiligen Rücksprung 18 des zweiten Reibrings 6 in Eingriff steht. Die erste Reibfläche 8 des ersten Reibrings 4 und die zweite Reibfläche 10 des zweiten Reibrings 6 branden in der dargestellten Ausführungsform die Reibringe jeweils in die Rotationsachsenrichtung A.

### Bezugszeichenliste:

- 1: - Bremsscheibe
- 2: - Träger
- 4: - erster Reibring
- 6: - zweiter Reibring
- 8: - erste Reibfläche
- 10: - zweite Reibfläche
- 12: - Verbindungsöffnung (erster Reibring)
- 13: - Verbindungsöffnung (zweiter Reibring)
- 14: - Spannmittel
- 16: - Vorsprung
- 18: - Rücksprung
- 22: - Anschlussabschnitt
- 24: - Montageabschnitt
- 26: - Übertragungsstruktur
- 28: - Transmissionsstruktur
- 30: - Reibsegment
- 31: - benachbarten Reibsegmenten zugewandte Fläche
- 40: - äußeres Nabenelement
- 41: - radiale Ausnehmungen
- 50: - inneres Nabenelement
- 51: - radiale Vorsprünge
- 52: - radiale Deckfläche
- A: - Rotationsachse
- D1: - Durchmesser erster Abschnitt
- D2: - Durchmesser zweiter Abschnitt
- R: - radiale Richtung
- U: - Umfangsrichtung

## Patentansprüche

1. Nutzfahrzeugbremsscheibe(1) umfassend einen ersten Reibring (4), einen zweiten Reibring (6) und einen Träger (2),
wobei die Bremsscheibe (1) dazu ausgelegt ist, um eine Rotationsachse (A) zu rotieren,
wobei der Träger (2) einen Anschlussabschnitt (22) aufweist, mittels welchen der Träger (2) an einem weiteren Element festlegbar ist,
wobei der erste Reibring (4) eine erste Reibfläche (8) und der zweite Reibring (6) eine zweite Reibfläche (10) aufweist, welche dazu ausgelegt sind, jeweils mit einem Bremsbelag in Kontakt zu treten,
wobei der erste Reibring (4) eine Vielzahl von Verspannöffnungen (12) und der zweite Reibring (6) eine Vielzahl von Verspannöffnungen (13) aufweist, wobei die Verspannöffnung (12) des ersten Reibrings (4) jeweils mit einer Verspannöffnung (13) des zweiten Reibrings (6) fluchtet,
wobei die Verspannöffnungen (12, 13) dazu ausgelegt sind, Spannmittel (14) aufzunehmen, um den ersten Reibring (4) mit dem zweiten Reibring (6) in Richtung der Rotationsachse (A) zu verspannen, und
wobei der Träger (2) mit dem ersten Reibring (4) und dem zweiten Reibring (6) derart verbunden ist, dass ein Drehmoment um die Rotationsachse (A) zwischen dem Träger (2) und den Reibringen (4, 6) übertragbar ist,
wobei der Träger (2) einen Montageabschnitt (24) aufweist,
wobei der erste und der zweite Reibring (4, 6) am Montageabschnitt (24) angeordnet sind,
**dadurch gekennzeichnet dass** der Montageabschnitt (24) eine Vielzahl von Übertragungsstrukturen (26) aufweist,
wobei der erste und der zweite Reibring (4, 6) jeweils eine Vielzahl von korrespondierenden Transmissionsstrukturen (28) aufweist,
wobei die Übertragungsstrukturen (26) derart formschlüssig mit den Transmissionsstrukturen (28) in Eingriff stehen oder bringbar sind, dass ein Drehmoment um die Rotationsachse (A) formschlüssig übertragbar ist,
wobei die Übertragungsstrukturen (26) einstückig mit dem Träger (2) und die Transmissionsstrukturen (28) einstückig mit dem Reibring (4, 6) ausgebildet sind.

2. Nutzfahrzeugbremsscheibe (1) gemäß Anspruch1,
wobei die Reibringe (4, 6) aus einem anderen Material ausgebildet sind, als der Träger (2).

3. Nutzfahrzeugbremsscheibe (1) einem der vorhergehenden Ansprüche,
wobei die beiden Reibringe derart gleich ausgebildet sind, sodass diese austauschbar zu einander sind.

4. Nutzfahrzeugbremsscheibe (1) einem der vorhergehenden Ansprüche,
wobei sich die Verspannöffnungen (12, 13) im Wesentlichen parallel zu der Rotationsachse (A) erstrecken.

5. Nutzfahrzeugbremsscheibe (1) gemäß einem der vorhergehenden Ansprüche,
wobei die Verspannöffnungen (12, 13) einen ersten Abschnitt und einen zweiten Abschnitt aufweisen,
wobei der erste Abschnitt als Vertiefung oder Sackloch und der zweite Abschnitt als Durchgangsloch ausgebildet ist, und
wobei der Durchmesser (D1) des ersten Abschnitts der Verspannöffnungen (12, 13) größer ist als der Durchmesser (D2) des zweiten Abschnitts der Verspannöffnungen (12, 13).

6. Nutzfahrzeugbremsscheibe (1) gemäß einem der vorhergehenden Ansprüche,
wobei der Montageabschnitt (24) ein radial nach außen ragender Montageflansch ist, welcher zwischen dem ersten und dem zweiten Reibring (4, 6) angeordnet ist.

7. Nutzfahrzeugbremsscheibe (1) gemäß einem der vorhergehenden Ansprüche,
wobei einer der Reibringe (4, 6) zumindest einen Vorsprung (16) aufweist, welcher derart in einen jeweiligen Rücksprung (18) im anderen Reibring (6, 4) eingreift, dass die beiden Reibringe (4, 6) gegen eine Verdrehung relativ zueinander um die Rotationsachse (A) formschlüssig gesichert sind.

8. Nutzfahrzeugbremsscheibe (1) gemäß einem der vorhergehenden Ansprüche,
wobei der erste Reibring (4) und/oder der zweite Reibring (6) in Umfangsrichtung (U) aus einer Vielzahl von Reibsegmenten (30) besteht/bestehen.

9. Nutzfahrzeugbremsscheibe gemäß Anspruch 8,
wobei jedes Reibsegment (30) mindestens eine der Verspannöffnungen (12, 13) und eine Vielzahl von Transmissionsstrukturen (28) aufweist.

10. Nutzfahrzeugbremsscheibe gemäß Anspruch 8 oder 9,
wobei die in Umfangsrichtung (U) den benachbarten Reibsegmenten (30) zugewandten Flächen (31) des Reibsegments (30) bereichsweise schräg zu der radialen Richtung (R) verlaufen.

11. Nutzfahrzeugbremsscheibe gemäß Anspruch 10,
wobei die den benachbarten Reibsegment (30) zugewandten Flächen (31) einen Vorsprung in Umfangsrichtung aufweist, welcher der Art ausgestaltet ist, dass das Reibsegment (30), welches in Rotationsvorzugsrichtung hinter einem anderen Reibsegment (30) angeordnet ist unter das andere Reibsegment (30) greift.

12. Nutzfahrzeugbremsscheibe gemäß einem der vorhergehenden Ansprüche, wobei die Träger (2) ein äußeres Nabenelement (40) und ein inneres Nabenelement (50) umfasst,
wobei das äußere Nabenelement (40) dazu ausgelegt ist, die Reibringe zu lagern,
wobei das innere Nabenelement (50) dazu ausgelegt ist, ein Drehmoment auf das weitere Element zu übertragen, wobei das äußere Nabenelement (40) radiale Ausnehmungen (41) aufweist, in welche radiale Vorsprünge (51) eingreifen, sodass ein Drehmoment formschlüssig zwischen dem äußeren Nabenelement (40) und dem inneren Nabenelement (50) übertragbar ist.

13. Nutzfahrzeugbremsscheibe (1) gemäß Anspruch 12,
wobei zumindest einige radiale Vorsprünge (51) radiale Deckflächen (52) aufweisen, welche einen Winkel (w1) mit der Rotationsachse (A) bildet.

## Claims

1. A commercial vehicle brake disc (1) comprising a first friction ring (4), a second friction ring (6) and a carrier (2),
wherein the brake disc (1) is designed to rotate about an axis of rotation (A), wherein the carrier (2) has a connecting portion (22) by means of which the carrier (2) can be fixed to a further element,
wherein the first friction ring (4) has a first friction surface (8) and the second friction ring (6) has a second friction surface (10), each of which is adapted to contact a brake lining,
wherein the first friction ring (4) has a plurality of clamping openings (12) and the second friction ring (6) has a plurality of clamping openings (13), wherein the clamping opening (12) of the first friction ring (4) is each aligned with a clamping opening (13) of the second friction ring (6),
wherein the clamping openings (12, 13) are adapted to receive clamping means (14) for clamping the first friction ring (4) with the second friction ring (6) in the direction of the axis of rotation (A), and
wherein the carrier (2) is connected to the first friction ring (4) and the second friction ring (6) in such a way that a torque about the axis of rotation (A) can be transmitted between the carrier (2) and the friction rings (4, 6),
wherein the carrier (2) has a mounting portion (24),
wherein the first and second friction rings (4, 6) are arranged at the mounting portion (24),
**characterized in that** the mounting portion (24) comprises a plurality of transfer structures (26),
the first and second friction rings (4, 6) each having a plurality of corresponding transmission structures (28),
wherein the transfer structures (26) are or can be positively engaged with the transmission structures (28) in such a way that a torque about the axis of rotation (A) can be positively transmitted,
wherein the transfer structures (26) are formed integrally with the carrier (2) and the transmission structures (28) are formed integrally with the friction ring (4, 6).

2. The commercial vehicle brake disc (1) according to claim 1,
wherein the friction rings (4, 6) are formed from a different material than the carrier (2).

3. The commercial vehicle brake disc (1) any one of the preceding claims,
wherein the two friction rings are designed identically so that they are interchangeable with each other.

4. The commercial vehicle brake disc (1) any one of the preceding claims,
wherein the clamping openings (12, 13) extend substantially parallel to the axis of rotation (A)

5. The commercial vehicle brake disc (1) according to any one of the preceding claims,
wherein the clamping openings (12, 13) have a first portion and a second portion,
wherein the first portion is formed as a recess or blind hole and the second portion is formed as a through hole, and
wherein the diameter (D1) of the first portion of the clamping openings (12, 13) is larger than the diameter (D2) of the second portion of the clamping openings (12, 13).

6. The commercial vehicle brake disc (1) according to any one of the preceding claims,
wherein said mounting portion (24) is a radially outwardly projecting mounting flange disposed between said first and second friction rings (4, 6).

7. The commercial vehicle brake disc (1) according to any one of the preceding claims,
wherein one of the friction rings (4, 6) has at least one projection (16) which engages in a respective recess (18) in the other friction ring (6, 4) in such a way that the two friction rings (4, 6) are positively secured against rotation relative to one another about the axis of rotation (A).

8. The commercial vehicle brake disc (1) according to any one of the preceding claims,
wherein the first friction ring (4) and/or the second friction ring (6) consists/consists of a plurality of friction segments (30) in the circumferential direction (U).

9. The commercial vehicle brake disc according to claim 8,
wherein each friction segment (30) has at least one of the clamping openings (12, 13) and a plurality of transmission structures (28).

10. The commercial vehicle brake disc according to claim 8 or 9,
wherein the surfaces (31) of the friction segment (30) facing the adjacent friction segments (30) in the circumferential direction (U) extend obliquely to the radial direction (R) in some areas.

11. The commercial vehicle brake disc according to claim 10,
wherein the surfaces (31) facing the adjacent friction segments (30) have a projection in the circumferential direction which is designed in such a way that the friction segment (30) which is arranged behind another friction segment (30) in the preferred direction of rotation engages under the other friction segment (30).

12. The commercial vehicle brake disc (1) according to any one of the preceding claims, wherein the carriers (2) comprise an outer hub member (40) and an inner hub member (50),
wherein the outer hub member (40) is designed to support the friction rings, wherein the inner hub element (50) is designed to transmit torque to the further element, the outer hub element (40) having radial recesses (41) in which radial projections (51) engage, so that torque can be transmitted in a form-fit manner between the outer hub element (40) and the inner hub element (50).

13. The commercial vehicle brake disc (1) according to claim 12,
wherein at least some radial projections (51) have radial cover surfaces (52) which form an angle (w1) with the axis of rotation (A).

## Revendications

1. Disque de frein (1) pour véhicule utilitaire, comprenant une première bague de friction (4), une seconde bague de friction (6) et un support (2), dans lequel
le disque de frein (1) est conçu pour tourner autour d'un axe de rotation (A), le support (2) comporte une portion de raccordement (22) au moyen de laquelle le support (2) peut être immobilisé sur un autre élément,
la première bague de friction (4) comprend une première surface de friction (8), et la seconde bague de friction (6) comprend une seconde surface de friction (10), qui sont conçues pour entrer chacune en contact avec une garniture de frein,
la première bague de friction (4) présente une pluralité d'ouvertures de serrage (12), et la seconde bague de friction (6) présente une pluralité d'ouvertures de serrage (13),
l'ouverture de serrage (12) de la première bague de friction (4) est en alignement avec une ouverture de serrage (13) respective de la seconde bague de friction (6),
les ouvertures de serrage (12, 13) sont conçues pour recevoir des moyens de serrage (14) pour serrer la première bague de friction (4) avec la seconde bague de friction (6) dans la direction de l'axe de rotation (A), et
le support (2) est relié à la première bague de friction (4) et à la seconde bague de friction (6) de telle sortie qu'un couple de rotation autour de l'axe de rotation (A) peut être transmis entre le support (2) et les bagues de friction (4, 6),
le support (2) comprend une portion de montage (24),
la première et la seconde bague de friction (4, 6) sont disposées sur la portion de montage (24),
**caractérisé en ce que**
la portion de montage (24) comprend une pluralité de structures de transfert (26),
la première et la seconde bague de friction (4, 6) comprennent chacune une pluralité de structures de transmission correspondantes (28),
les structures de transfert (26) sont ou peuvent être amenées en engagement par coopération de forme avec les structures de transmission (28) de telle sorte qu'un couple de rotation autour de l'axe de rotation (A) peut être transféré par coopération de forme, et
les structures de transfert (26) sont réalisées d'un seul tenant avec le support (2), et les structures de transmission (28) sont réalisées d'un seul tenant avec la bague de friction (4, 6).

2. Disque de frein (1) pour véhicule utilitaire selon la revendication 1,
dans lequel
les bagues de friction (4, 6) sont réalisées en un matériau différent de celui du support (2).

3. Disque de frein (1) pour véhicule utilitaire selon l'une des revendications précédentes,
dans lequel
les deux bagues de friction sont réalisées de manière identique de manière à être interchangeables l'une avec l'autre.

4. Disque de frein (1) l'une des revendications précédentes,
dans lequel les ouvertures de serrage (12, 13) s'étendent sensiblement parallèlement à l'axe de rotation (A).

5. Disque de frein (1) pour véhicule utilitaire selon l'une des revendications précédentes,
dans lequel
les ouvertures de serrage (12, 13) ont une première portion et une seconde portion,
la première portion est réalisée sous forme de renfoncement ou de trou borgne, et la seconde portion est réalisée sous forme de trou traversant, et le diamètre (D1) de la première portion des ouvertures de serrage (12, 13) est plus grand que le diamètre (D2) de la seconde portion des ouvertures de serrage (12, 13).

6. Disque de frein (1) pour véhicule utilitaire selon l'une des revendications précédentes,
dans lequel
la portion de montage (24) est une bride de montage faisant saillie radialement vers l'extérieur, qui est disposée entre la première et la seconde bague de friction (4, 6).

7. Disque de frein (1) pour véhicule utilitaire selon l'une des revendications précédentes,
dans lequel
l'une des bagues de friction (4, 6) présente au moins une saillie (16) qui s'engage dans un retrait respectif (18) dans l'autre bague de friction (6, 4) de telle sorte que les deux bagues de friction (4, 6) sont bloquées par coopération de forme à l'encontre d'une rotation l'une par rapport à l'autre autour de l'axe de rotation (A).

8. Disque de frein (1) pour véhicule utilitaire selon l'une des revendications précédentes,
dans lequel
la première bague de friction (4) et/ou la seconde bague de friction (6) consiste(nt) en une pluralité de segments de friction (30) en direction périphérique (U).

9. Disque de frein pour véhicule utilitaire selon la revendication 8,
dans lequel
chaque segment de friction (30) présente au moins l'une des ouvertures de serrage (12, 13) et une pluralité de structures de transmission (28).

10. Disque de frein pour véhicule utilitaire selon la revendication 8 ou 9, dans lequel
les surfaces (31) du segment de friction (30) tournées vers les segments de friction adjacents (30) dans la direction périphérique (U) s'étendent localement en oblique par rapport à la direction radiale (R).

11. Disque de frein pour véhicule utilitaire selon la revendication 10,
dans lequel
les surfaces (31) tournées vers les segments de friction adjacents (30) présentent une saillie dans la direction périphérique, qui est conçue de telle sorte que le segment de friction (30), disposé derrière un autre segment de friction (30) dans la direction de rotation préférentielle, s'engage sous l'autre segment de friction (30).

12. Disque de frein pour véhicule utilitaire selon l'une des revendications précédentes,
dans lequel
le support (2) comprend un élément de moyeu extérieur (40) et un élément de moyeu intérieur (50),
l'élément de moyeu extérieur (40) est conçu pour supporter les bagues de friction,
l'élément de moyeu intérieur (50) est conçu pour transférer un couple de rotation à l'autre élément, l'élément de moyeu extérieur (40) présentant des évidements radiaux (41) dans lesquels s'engagent des saillies radiales (51), de sorte qu'un couple de rotation peut être transféré par coopération de forme entre l'élément de moyeu extérieur (40) et l'élément de moyeu intérieur (50).

13. Disque de frein (1) pour véhicule utilitaire selon la revendication 12,
dans lequel
quelques-unes au moins des saillies radiales (51) comprennent des surfaces de couverture radiales (52) qui définissent un angle (w1) avec l'axe de rotation (A).
